# EUROPEAN PATENT APPLICATION

(11) **EP 4 711 272 A1**
(43) Date of publication of application: **18.03.2026**
(21) Application number: 24222091.1
(22) Date of filing: 20.12.2024
(51) Int. Cl.: B64C 27/59, B64C 27/72, B64C 11/34, B64C 27/39, B64C 27/57

(54) **SWASHPLATELESS HELICOPTER AND CONTROL METHOD THEREOF**

(30) Priority: 11.09.2024 CN 202411270550
(71) Applicant: Guangzhou Walkera Technology Co., Ltd., Guangzhou, Guangdong 511475 (CN)
(72) Inventor: LUO, Zhihong, Guangzhou, Guangdong, 511475 (CN); LI, Ben, Guangzhou, Guangdong, 511475 (CN); XIA, Ye, Guangzhou, Guangdong, 511475 (CN); XU, Ke, Guangzhou, Guangdong, 511475 (CN); WU, Chunsheng, Guangzhou, Guangdong, 511475 (CN)
(74) Representative: Herrero & Asociados, S.L.

(57) **Abstract**

The present invention relates to the technical field of flight equipment, and in particular to a swashplateless helicopter and a control method thereof. The swashplateless helicopter incudes an airframe (1). A blade motor (2) is mounted on the airframe (1) and controlled by a control system, which is provided with a rotating bracket (5) in a transmission way. The rotating bracket (5) has a first swinging body (6) and a second swinging body (7) which respectively hinged at two opposite sides of the rotating bracket 5. A first blade (3) and a second blade (4) are respectively connected to the first swinging body (6) and the second swinging body (7). The first swinging body (6) and the second swinging body (7) are respectively configured to drive the first blade (3) and the second blade (4) to swing forward or backward in a rotating direction of the blade motor (2), so as to respectively change a pitch of the first blade (3) and the second blade (4). The present invention eliminates a swashplate and a steering gear relative to a traditional unmanned helicopter structure, but can still achieve control of a direction-changing flight of the helicopter, which effectively reduces manufacturing cost, reducing load, while improving endurance, simplifying structure, and prolonging service life of helicopter.

## Description

### TECHINCAL FIELD

The present invention relates to the technical field of flight equipment, and in particular to a swashplateless helicopter and a control method thereof.

### BACKGROUND

Unmanned helicopters can fly smoothly at a high altitude and change directions flexibly and freely, which thus have achieved enormous popularity among consumers due to its excellent interestingness and entertainment. In order to fly smoothly at a high altitude and change directions flexibly and freely, the unmanned helicopter is required to overcome its own gravity and have a direction control system with accurate controlling. The flight of an aero-model helicopter is realized according to the Bernoulli principle. The helicopter thus can hover in the air with aerodynamic force generated by the propellers rotating at a high speed. With regard to a blade structure of the helicopter propeller, blades on two opposite sides of the propeller are often required to form a certain pitch (or an angle of attack) in the rotating direction, so that lower sides of the blades can form a certain lift force when the propeller rotates at the high speed in the air. When the lift force on the lower sides of the blades reaches a certain level after the propeller reaches a certain rotational speed, the gravity of an airframe of the helicopter can be overcome and the airframe of the helicopter can be driven to rise upwards, and can be subsequently controlled to ascend or descend by controlling the rotational speed of the propeller.

The direction control system of the helicopter is responsible for controlling the airframe to change directions during flying. Its control principle is as follows. By controlling and adjusting the pitch (or angle of attack) of the blades in the rotating process, the pitch (or angle of attack) of the propeller blades is continuously changed at a certain rotating position, the air lift force received by the blades at this rotating position is accordingly changed, in turn the air lift force received by the airframe at this position is also changed. With the changes of the lift force received at a local position of the airframe, the airframe will tilt as a whole, and as the propeller continues to rotate, the airframe of the helicopter can fly and move in the tilting direction, thereby achieving a direction-changing flight of the helicopter.

However, in order to change the pitch (or angle of attack) of the propeller blades during the flight of the unmanned helicopter, an additional swashplate is provided at a top of the airframe in the prior art, and the direction control system is typically provided with a servo, generally including a steering gear and an electromagnetic valve. Meanwhile, the blades of the propeller also need to be able to integrally rotate up and down, such that the pitch (or angle of attack) of the blades can be changed with the upward and downward rotation of the blades. In addition, the swashplate is generally equipped with a connecting rod structure controlled by the steering gear of the servo. With such configuration, when the propeller of the unmanned helicopter rotates at a high speed during flight, the pitch (or angle of attack) of the blades can be simply adjusted in real time by the control system in a way that the swashplate is driven to move through the steering gear of the servo, the connecting rod structure on the swashplate in turn drives the blades to deflect upwardly and downwardly, thereby finally realizing direction-changing flight of the helicopter and controlling the flight direction of the helicopter.

Although the above-mentioned existing prior art can control the flight direction of the helicopter by changing the pitches of the blades by the means of the steering gear, each blade of the propeller is required to be equipped with a servo having a steering gear. It means that at least multiple servos need to be additionally mounted, which obviously increases manufacturing costs of the helicopter. In addition, the steering gear and the electromagnetic valve of the servo are relatively large in size and weight, which will undoubtedly increase load of the unmanned helicopter, thereby reducing endurance of the helicopter. Furthermore, service life of the unmanned helicopter will be affected due to complicated structure of the swashplate on the propeller and prone to being damaged.

### SUMMARY

It is therefore an object of the present invention to provide a swashplateless helicopter and a control method thereof free from the aforesaid drawbacks of the prior art. The helicopter in the present invention eliminates the swashplate and the steering gear existing in the traditional unmanned helicopter structure, which can maintain control of a direction-changing flight of the helicopter, with effectively reduced manufacturing cost, reduced load of an airframe of the helicopter, as well as improved endurance, simplified structure, and prolonged service life of the helicopter.

This object is accomplished for a swashplateless helicopter by the characterizing features of claim 1, and for a method by the characterizing features of claim 6, in conjunction with the features of the respective preamble.

The dependent claims describe possible embodiments of the present invention.

The advantages and benefits of the present invention are described in the detailed description of the invention.

### BRIEF DESCRIPTION OF THE DRAWINGS

In order to more clearly illustrate the technical solutions in the present invention, the accompanying drawings required to be used in the description of the embodiments are introduced briefly as follows. Apparently, the accompanying drawings in the following description are some embodiments of the present invention, and it will be understood by those ordinarily skilled in the art that other embodiments can be obtained according to the accompanying drawings without creative efforts. In the drawings:
FIG. 1 illustrates a perspective view of a helicopter according to an embodiment of the present invention;
FIG. 2 illustrates a side view of FIG. 1;
FIG. 3 illustrates a partial view of FIG. 2;
FIG. 4 illustrates an exploded view showing structure of a rotating bracket, a first swinging body and a second swinging body of the helicopter according to an embodiment of the present invention;
FIG. 5 illustrates a partial view of the helicopter according to an embodiment of the present invention;
FIG. 6 illustrates a schematic diagram of a method for controlling the helicopter to fly forward according to an embodiment of the present invention;
FIG. 7 illustrates a schematic diagram of a method for controlling the helicopter to brake backward according to an embodiment of the present invention;
FIG. 8 illustrates a schematic diagram of a method for controlling the helicopter to fly backward according to an embodiment of the present invention;
FIG. 9 illustrates a schematic diagram of a method for controlling the helicopter to brake forward according to an embodiment of the present invention;
FIG. 10 illustrates a schematic diagram of a method for controlling the helicopter to fly leftward according to an embodiment of the present invention; and
FIG. 11 illustrates a schematic diagram of a method for controlling the helicopter to brake rightward according to an embodiment of the present invention.

### DETAILED DESCRIPTION

Hereinafter, embodiments of the present invention will be described in detail, examples of which are illustrated in the accompanying drawings, wherein the same or similar reference numerals indicate the same or similar elements or elements having the same or similar functions throughout. The embodiments described below with reference to the accompanying drawings are exemplary and are merely for the purpose of explaining the present invention, and are not to be construed as limiting the present invention.

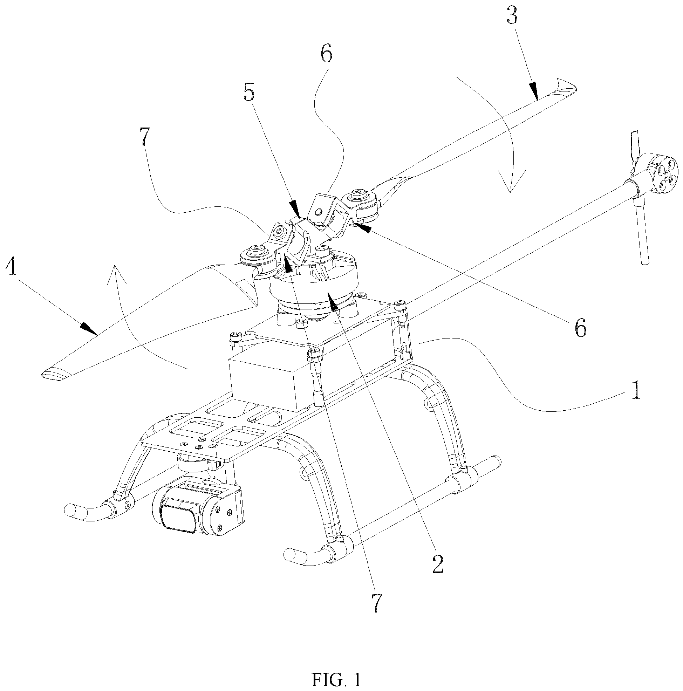

FIG. 1 shows a perspective view of a swashplateless helicopter according to an embodiment of the present invention, which has an airframe 1. A blade motor 2 is mounted on the airframe 1 and controlled by a control system inside the airframe 1. A first blade 3 and a second blade 4 are distributed on two opposite sides of the blade motor 2, which is rotatable clockwise driven by the blade motor 2 during operation, as indicated by arrows. A rotating bracket 5 is further provided at a top of the blade motor 2 in a transmission way. A first swinging body 6 and a second swinging body 7 are respectively hinged to two opposite sides of the rotating bracket 5, and the first blade 3 and the second blade 4 are respectively connected to the first swinging body 6 and the second swinging body 7. The first swinging body 6 and the second swinging body 7 are respectively configured to bring the first blade 3 and the second blade 4 to swing forward or backward in a rotating direction of the blade motor 2, so as to change the pitch of the first blade 3 and the second blade 4. In addition, the blade motor 2 is provided with a motor encoder electrically connected to the control system, which is configured to feed the rotating position of the blade motor 2 back to the control system in real time, so that the control system can monitor rotating positions of the first blade 3 and the second blade 4 in real time.

According to the swashplateless helicopter of this embodiment, a rotating bracket 5 is disposed on the blade motor 2 in a transmission way, which is not directly connected to the first blade 3 and the second blade 4, but with a first swinging body 6 additionally connected between the rotating bracket 5 and the first blade 3, and a second swinging body 7 additionally connected between the rotating bracket 5 and the second blade 4, namely the first swinging body 6 and the second swinging body 7 are hinged to the two opposite sides of the rotating bracket 5. With the first swinging body 6 and the second swinging body 7 respectively hinged to the rotating bracket 5 at two opposite sides, the first swinging body 6 enables the first blade 3 to swing forward or backward in the rotating direction of the blade motor 2, thereby changing the pitch of the first blade 3 with the swinging motion of the first swinging body 6. Similarly, the second swinging body 7 enables the second blade 4 to swing forward or backward in the rotating direction of the blade motor 2, thereby changing the pitch of the second blade 4 with the swinging motion of the second swinging body 7. With such configuration, once an instantaneous torque of the blade motor 2 is changed, such as increasing or decreasing, by the control system during flight, the first swinging body 6 and the second swinging body 7 will swing in the rotating direction of the blade motor 2 respectively due to inertia, which in turn drives the first blade 3 and the second blade 4 to swing and the pitch thereof is changed accordingly. Therefore, the unmanned helicopter structure of the present embodiment maintains to be able to adjust the pitch of each blade of the propeller in the rotating state even if the swashplate and the steering gear existing in the prior art are cancelled.

Furthermore, with the motor encoder electrically connected to the control system of the helicopter, the rotating position of the blade motor 2 is fed back to the control system in real time, so that rotating positions of the first blade 3 and the second blade 4 can be monitored in real time by the control system of the helicopter.

Therefore, according to the present embodiment, in order to change the flight direction of the airframe 1 of the helicopter in actual use, it is only required the control system to determine the rotating positions of the first blade 3 and the second blade 4 by the motor encoder, and control the instantaneous torque of the blade motor 2 at the corresponding rotating position to respectively change the pitch of the first blade 3 and the second blade 4 by swinging along with the first swinging body 6 and the second swinging body 7 under the inertia, when the first blade 3 and the second blade4 reach the corresponding rotating positions, which correspondingly increases or decreases air lift forces of the first blade 3 and the second blade 4 at the corresponding positions. Accordingly, the air lift force of the airframe 1 at the corresponding position is changed, such that a certain local position of the airframe 1 will be lifted or lowered due to change of the lift force and the helicopter thus tilts as a whole. Subsequently, with continuous rotation of the propeller, the airframe of the helicopter fly and move in the tilting direction, thus realizing direction-changing flight of the helicopter.

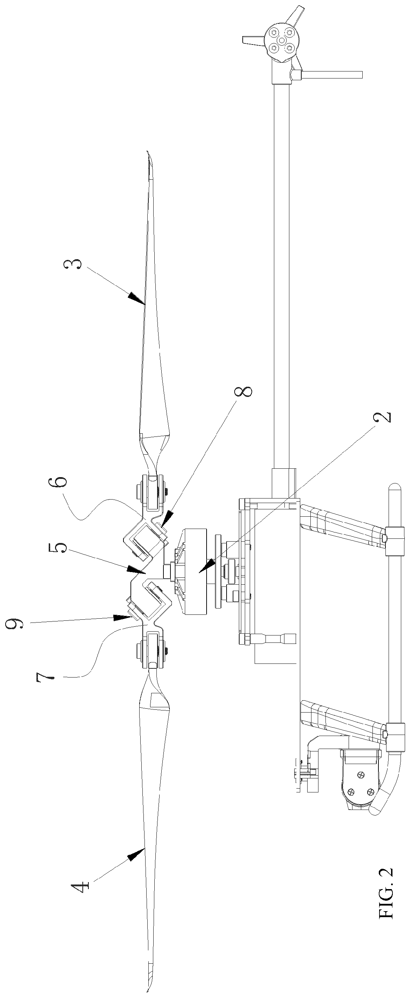

Referring now to FIG. 2, according to at least one embodiment, a first hinge shaft 8 and a second hinge shaft 9 are respectively disposed at the two opposite sides of the rotating bracket 5, with the first swinging body 6 pivoted to the first hinge shaft 8 and the second swinging body 7 pivoted to the second hinge shaft 9. In such easy way, the first swinging body 6 and the second swinging body 7 is able to swing at the two sides of the rotating bracket 5 respectively.

In addition, the first hinge shaft 8 and the second hinge shaft 9 are parallel to each other. The first hinge shaft 8 is obliquely disposed, with an upper end of the first hinge shaft 8 obliquely directed to the rotating shaft of the rotating bracket 5. The second hinge shaft 9 is also obliquely disposed, with a lower end of the second hinge shaft 9 obliquely directed to the rotating shaft of the rotating bracket 5. Advantageously, both the first hinge shaft 8 and the second hinge shaft 9 are inclined by 45 degrees relative to the rotating shaft of the rotating bracket 5.

With such configuration of the rotating bracket 5, when the blade motor 2 undergoes a change in instantaneous torque to cause the first swinging body 6 and the second swinging body 7 to swing due to inertia in the rotating direction of the blade motor 2, it can ensure opposite changes of the pitch of the first blade 3 and the second blade 4 relative to each other, while with same amplitudes of the changes in the pitch. For example, when both the first swinging body 6 and the second swinging body 7 swing backward due to inertia in the rotating direction of the blade motor 2 caused by increase of the instantaneous torque of the blade motor 2, such structure described above can achieve increased pitch of the first blade 3 and decreased pitch of the second blade 4, while the pitch increase amplitude of the first blade 3 is the same as the pitch decrease amplitude of the second blade 4.

Specifically, in the embodiment shown in FIG. 2, in the case that the instantaneous torque of the blade motor 2 is increased, the first swinging body 6 drives the first blade 3 to swing backward due to inertia around the first hinge shaft 8 in the rotating direction of the blade motor 2 and thus increase the pitch of the first blade 3. Simultaneously, the second swinging body 7 drives the second blade 4 to swing backward due to inertia around the second hinge shaft 9 in the rotating direction of the blade motor 2 and thus decrease the pitch of the second blade 4. Therefore, when the torque of the blade motor 2 is increased instantaneously, due to the backward rotation of the first swinging body 6 and the second swinging body 7 under inertial, the pitch of the first blade 3 is instantaneously increased and the pitch of the second blade 4 is instantaneously decreased. As a result, the instantaneous lift force received by the first blade 3 is increased, and, on the contrary, the instantaneous lift force received by the second blade 4 is decreased, so that the first blade 3 with the instantaneously increased lift force can drive the airframe 1 to lift at its own position, while the second blade 4 with instantaneously decreased lift force can guide the airframe 1 to lower at its own position, thereby making for titling of the airframe 1 as a whole. With the air thrust generated by the continuous rotation of the propeller, the helicopter thus can travel in the tilting direction, thereby achieving direction-changing flight of the helicopter.

Conversely, in the case that the instantaneous torque of the blade motor 2 is decreased, the first swinging body 6 drives the first blade 3 to swing forward due to inertia around the first hinge shaft 8 in the rotating direction of the blade motor 2 and thus decreases the pitch of the first blade 3. Simultaneously, the second swinging body 7 drives the second blade 4 to swing forward due to inertia around the second hinge shaft 9 in the rotating direction of the blade motor 2 and thus increases the pitch of second blade 4. Therefore, when the torque of the blade motor 2 is instantaneously decreased, the pitch of the first blade 3 is instantaneously decreased and the pitch of the second blade 4 is instantaneously increased due to forward rotation of the first swinging body 6 and the second swinging body 7 in the rotating direction of the blade motor 2 under inertia. As a result, the instantaneous lift force received by the first blade 3 is decreased, and on the contrary, the instantaneous lift force received by the second blade 4 is increased, so that the first blade 3 with the instantaneously decreased lift force can guide the airframe 1 to lower at its own position, while the second blade 4 with the instantaneously increased lift force can guide the airframe 1 to lift at its own position, thereby enabling the airframe 1 which has been traveling in the titling state to tilt in the opposite direction. As such, the airframe 1 which has been in direction-changing flight can be decelerated, thus achieving braking of the helicopter.

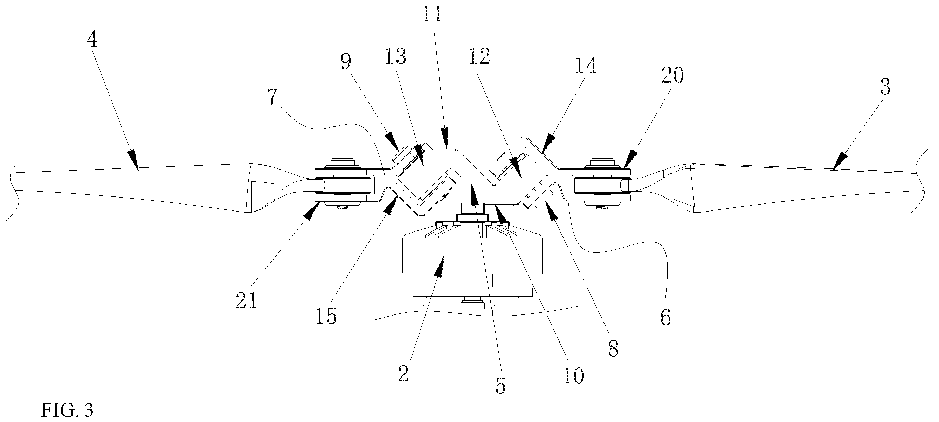

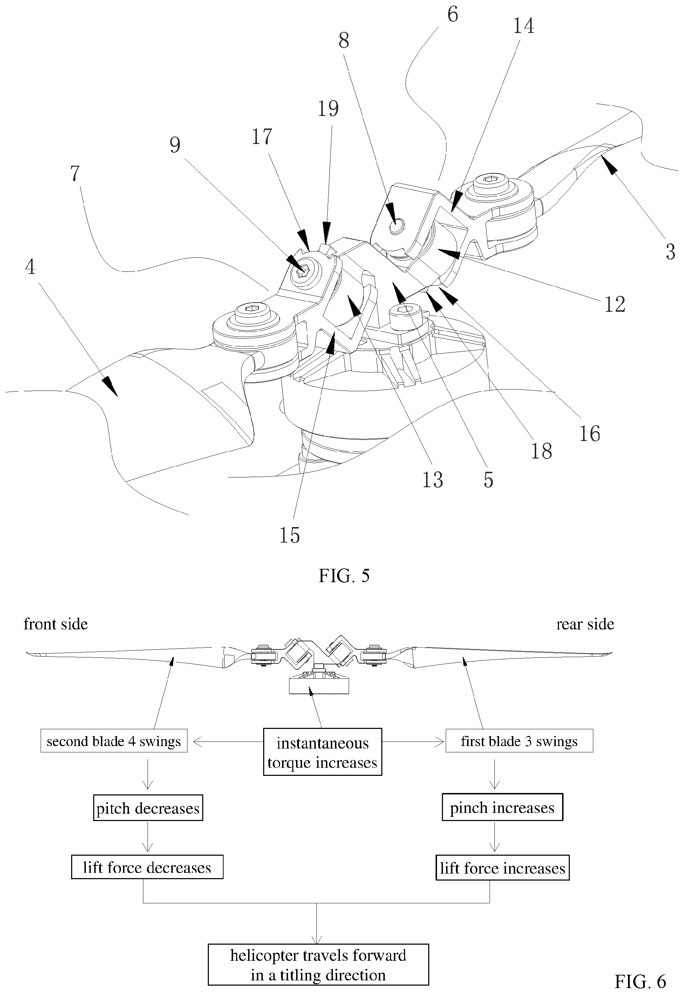

FIGs. 3 to 5 depicts the structure of the rotating bracket 5. In combination with FIG. 3 and FIG. 5, a first connecting arm 10 and a second connecting arm 11 are respectively integrally formed on the two opposite sides of the rotating bracket 5 according to an embodiment, with a height position of the first connecting arm 10 lower than that of the second connecting arm 11. A first hinge plate 12 extending obliquely upward is integrally formed at an outer end of the first connecting arm 10, and a second hinge plate 13 extending obliquely downward is integrally formed at an outer end of the second connecting arm 11, with the first hinge plate 12 and the second hinge plate 13 parallel to each other, the upper end of the first hinge plate 12 flush with the top of the second connecting arm 11, and the lower end of the second hinge plate 13 flush with the bottom of the first connecting arm 10. In addition, a first U-shaped blade clamp 14 is disposed at an inner end of the first swinging body 6 and a second U-shaped blade clamp 15 is disposed at an inner end of the second swinging body 7.

With such configuration, during assembly, with a clamp opening of the first U-shaped blade clamp 14 parallelly sleeved with the first hinge plate 12, the first hinge shaft 8 is vertically pivoted to both the first hinge plate 12 and the first U-shaped blade clamp 14, which facilitates inclined installation of the first hinge shaft 8, and enables both the first swinging body 6 and the rotating bracket 5 to be hinged with the inclined first hinge shaft 8, thereby allowing the first swinging body 6 to bring the first blade 3 to swing around the first hinge shaft 8, and thus easily achieving change of the pitch of the first blade 3.

Similarly, during assembly, with a clamp opening of the second U-shaped blade clamp 15 parallelly sleeved with the second hinge plate 13, and the second hinge shaft 9 is vertically pivoted to both the second hinge plate 13 and the second U-shaped blade clamp 15, which facilitates inclined installation of the second hinge shaft 9, and enables both the second swinging body 7 and the rotating bracket 5 to be hinged with the inclined second hinge shaft 9, thereby allowing the second swinging body 7 to bring the second blade 4 to swing around the second hinge shaft 9 , and thus easily achieving change of the pitch of the second blade 4.

In addition, arranged positions of the first connecting arm 10 and the second connecting arm 11, and inclined extension directions and extension heights of the first hinge plate 12 and the second hinge plate 13 of the rotating bracket 5 can ensure opposite changes of the pitch of the first blade 3 and the second blade 4 relative to each other caused by inertial swinging of the first swinging body 6 and the second swinging body 7 in the rotating direction of the blade motor 2. For example, in the case that the increased instantaneous torque of the blade motor 2 leads to inertial backward swinging of both the first swinging body 6 and the second swinging body 7 in the rotating direction of the blade motor 2, the above configuration of the rotating bracket 5 can ensure increased pitch of the first blade 3 and decreased pitch of the second blade 4, which finally guides the airframe 1 of the helicopter to tilt as a whole, thus achieving the direction-changing flight of the airframe 1.

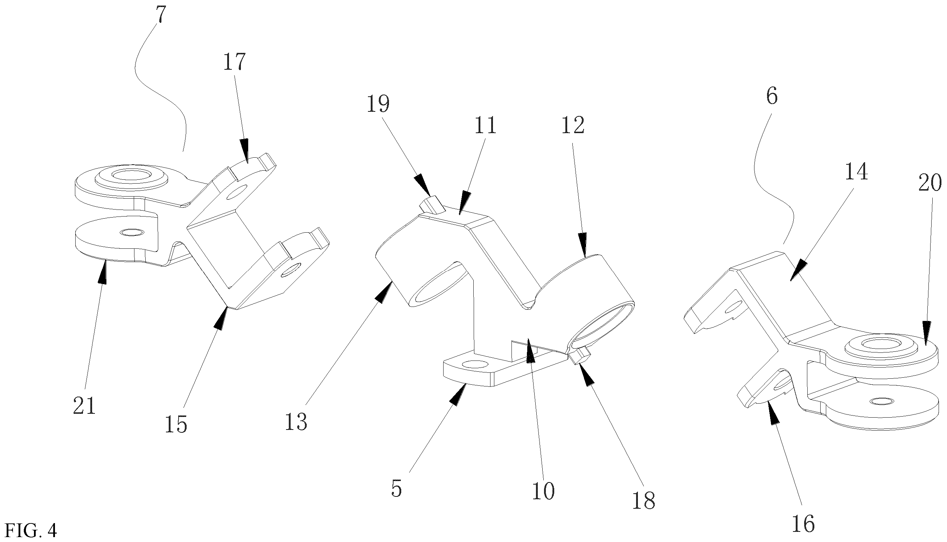

With reference to FIG. 4 and FIG. 5, a first arc-shaped guide groove 16 is formed in an end face of the first U-shaped blade clamp 14 and a second arc-shaped guide groove 17 is formed in an end face of the second U-shaped blade clamp 15 according to an embodiment of the present invention. Correspondingly, the first connecting arm 10 or the first hinge plate 12 is provided with a first limiting block 18 located in the first arc-shaped guide groove 16, and the second hinge plate 13 or the second connecting arm 11 is provided with a second limiting block 19 located in the second arc-shaped guide groove 17.

In such configuration, rotation angle of the first swinging body 6 can be limited with the first limiting block 18 in limitation contact with two ends of the first arc-shaped guide groove 16 during reciprocating rotation of the first arc-shaped guide groove 16 along with the first swinging body 6, which thus controls the change of the pitch of the first blade 3 within a reasonable range during the reciprocating rotation along with the first swinging body 6 can be controlled. Similarly, rotation angle of the second swinging body 7 can be limited with the second limiting block 19 in limitation contact with two ends of the second arc-shaped guide groove 17 during reciprocating rotation of the second arc-shaped guide groove 17 with the second swinging body 7, which also controls the change of the pitch of the second blade 4 within a reasonable range during the swinging along with the second swinging body 7.

To facilitate extension and folding of the first blade 3 and the second blade 4 on the rotating bracket 5, a third U-shaped blade clamp 20 may be further disposed at the outer end of the first swinging body 6, to which the first blade 3 is pivoted, and a fourth U-shaped blade clamp 21 may be also disposed at the outer end of the second swinging body 7, to which the second blade 4 is pivoted.

A control method is further provided, which is adapted to control the swashplateless helicopter in any case mentioned above to change flight direction. When the propeller motor 2 of the helicopter is actuated to drive the blades of the propellers to rotate clockwise at a high speed to let the airframe 1 of the helicopter rise as a whole, the airframe 1 is hovering in the air at this time. In order to drive the airframe 1 to perform a direction-changing flight (such as forward, leftward, rightward or backward), the instantaneous torque of the blade motor 2 at a specific rotating position is increased or decreased by the control system, the first swinging body 6 and the second swinging body 7 are respectively forced to swing backward or forward at the specific rotating position together with the first blade 3 and the second blade 4, under the action of inertia. Once the first blade 3 and the second blade 4 are triggered to swing at the specific rotating position, the pitch of the first blade 3 and the second blade 4 at the specific rotating position will be changed, which in turn changes lift forces of the first blade 3 and the second blade 4 at this position, so that the lift force of the airframe 1 is locally changed accordingly, resulting in titling of the airframe 1 in the corresponding direction in the air. The helicopter thus can automatically move forward in the tilting direction after tilted, thus achieving the direction-changing flight of the helicopter.

FIG. 6 shows a method for controlling the helicopter to fly forward according to an embodiment of the present invention. The control is performed as follows to allow the airframe 1 to fly forward.

The propeller motor 2 of the helicopter is actuated to drive the blades of the propellers to rotate clockwise at a high speed to make the airframe 1 hover in the air. When the motor encode detects that the first blade 3 and the second blade 4 respectively rotate to a rear side and a front side of the airframe 1, the control system increases the instantaneous torque of the blade motor 2 (namely instantaneously increasing the rotational speed of the blade motor 2), the first swinging body 6 and the second swinging body 7 are respectively forced to swing backward in the rotating direction of the blade motor 2 together with the first blade 3 and the second blade 4, under the action of inertia, then the instantaneous pitch of the first blade 3 swinging backward is increased at the rear side of the airframe 1, while the instantaneous pitch of the second blade 4 swinging backward is decreased at the front side of the airframe 1. Subsequently, with function of the motor encoder feeding back the rotating positions of the first blade 3 and the second blade 4 to the control system in real time, once the control system monitors that the first blade 3 and the second blade 4 rotate to the rear side and the front side of the airframe 1 respectively, the instantaneous pitch of the first blade 3 at the rear side of the airframe 1 is continuously increased and the instantaneous pitch of the second blade 4 at the front side of the airframe 1 is continuously decreased with continuously increasing instantaneous torque of the blade motor 2 by the control system. In this way, the lift force of the first blade 3 rotating to the rear side of the airframe 1 can be increased, and the lift force of the second blade 4 rotating to the front side of the airframe 1 can be decreased. Accordingly, the first blade 3 with the instantaneously increased lift force drives the airframe 1 to lift at the rear side of the airframe 1, while the second blade 4 with the instantaneously decreased lift force guides the airframe 1 to lower at the front side of the airframe 1, which allows the airframe 1 to tilt forward as a whole. The helicopter further flies forward with the air thrust generated by the continuous rotation of the propellers, thus enabling the helicopter to change from a hovering state to a forward flight state.

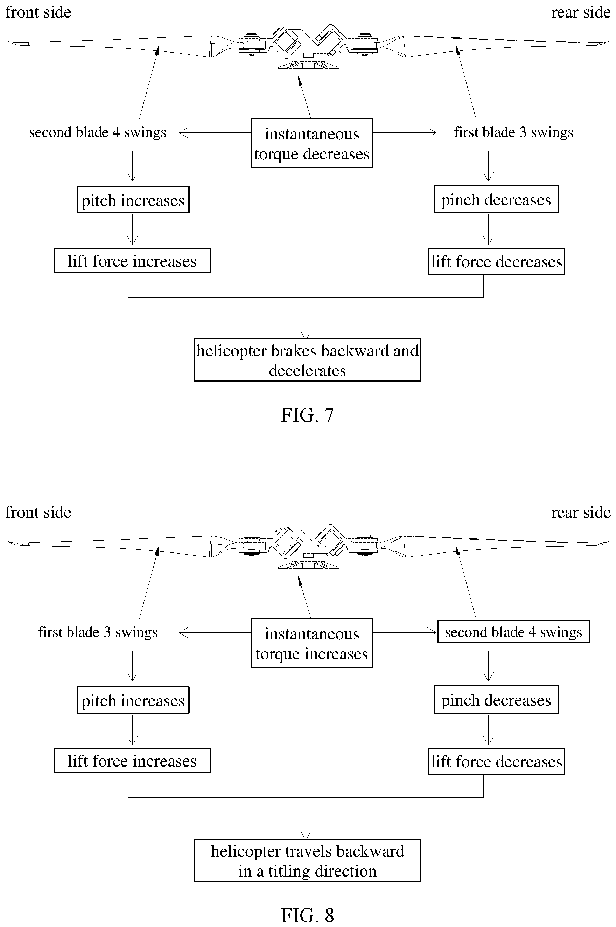

FIG. 7 shows a method for controlling the helicopter to brake backward according to an embodiment of the present invention. The control is performed as follows to allow the airframe 1 in the forward flight state to brake backward.

When the motor encoder detects that the first blade 3 and the second blade 4 rotate to the rear side and the front side of the airframe 1 respectively, the control system reduces the instantaneous torque of the blade motor 2 (namely instantaneously reducing the rotational speed of the blade motor 2), the first swinging body 6 and the second swinging body 7 are respectively forced to swing forward in the rotating direction of the blade motor 2 together with the first blade 3 and the second blade 4, under the action of inertia, then the instantaneous pitch of the first blade 3 swinging forward is decreased at the rear side of the airframe 1, and the instantaneous pitch of the second blade 4 swinging forward is increased at the front side of the airframe 1, so that the lift force of the first blade 3 rotating to the rear side of the airframe 1 can be decreased and the lift force of the second blade 4 rotating to the front side of the airframe 1 can be increased. Accordingly, the first blade 3 with the instantaneously decreased lift force guides the airframe 1 to lower at the rear side of the airframe 1, and the second blade 4 with the instantaneously increased lift force guides the airframe 1 to lift at the front side of the airframe 1, which enables the airframe 1 in the forward titling flight state to tilt in the opposite direction, thereby braking backward and decelerating the airframe 1 in forward flight, thus realizing a backward braking function.

FIG. 8 shows a method for controlling the helicopter to fly backward according to an embodiment of the present invention. The control is performed as follows to allow the airframe 1 to fly backward.

The propeller motor 2 of the helicopter is actuated to drive the blades of the propellers to rotate clockwise at a high speed to make the airframe 1 hover in the air. When the motor encoder monitors that the first blade 3 and the second blade 4 respectively rotate to the front side and the rear side of the airframe 1, the control system increases the instantaneous torque of the blade motor 2 (namely instantaneously increasing the rotational speed of the blade motor 2), under the action of inertia, the first swinging body 6 and the second swinging body 7 are respectively forced to swing backward in the rotating direction of the blade motor 2 together with the first blade 3 and the second blade 4, so that the instantaneous pitch of the first blade 3 swinging backward is increased at the front side of the airframe 1 and the instantaneous pitch of the second blade 4 swinging backward is decreased at the rear side of the airframe 1. Subsequently, with function of the motor encoder feeding back the rotating positions of the first blade 3 and the second blade 4 to the control system in real time, once the control system monitors that the first blade 3 and the second blade 4 rotate to the front side and the rear side of the airframe 1 respectively, the instantaneous pitch of the first blade 3 at the front side of the airframe 1 is continuously increased and the instantaneous pitch of the second blade 4 at the rear side of the airframe 1 is continuously decreased with continuously increasing the instantaneous torque of the blade motor 2 by the control system. In this way, the lift force of the first blade 3 when it rotates to the front side of the airframe 1 can be improved, and the lift force of the second blade 4 when it rotates to the rear side of the airframe 1 can be reduced. Accordingly, the first blade 3 with the instantaneously increased lift force drives the airframe 1 to lift at the front side of the airframe 1, while the second blade 4 with the instantaneously decreased lift force guides the airframe 1 to lower at the rear side of the airframe 1, which allows the airframe 1 to tilt backward as a whole. The helicopter further flies backward with the air thrust generated by the continuous rotation of the propellers, thus enabling the helicopter to change from the hovering state to a backward flight state.

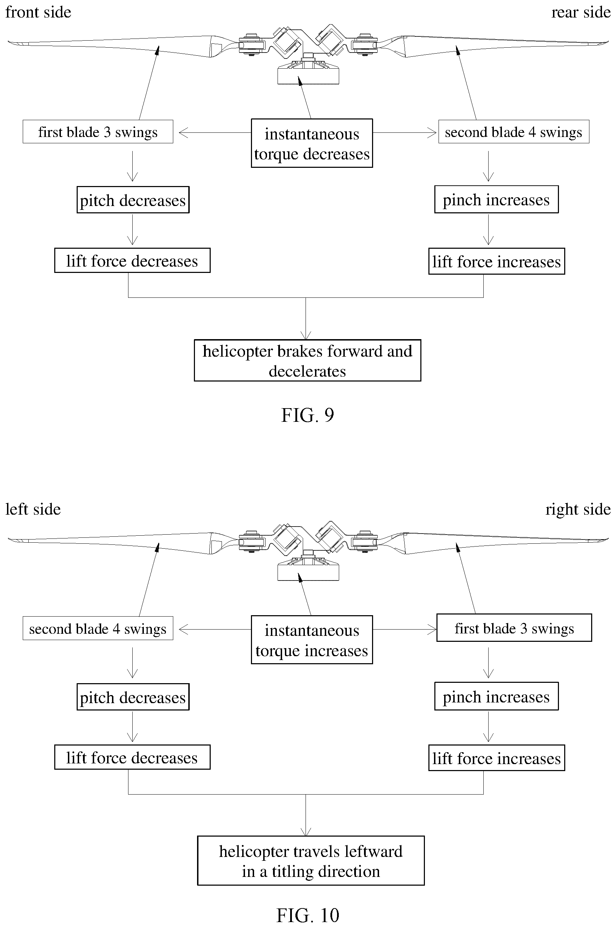

FIG. 9 shows a method for controlling the helicopter to brake forward according to an embodiment of the present invention. The control is performed as follows to allow the airframe 1 in backward flight state to brake forward.

When the motor encoder detects that the first blade 3 and the second blade 4 rotate to the front side and the rear side of the airframe 1 respectively, the control system reduces the instantaneous torque of the blade motor 2 (namely instantaneously reducing the rotational speed of the blade motor 2), under the action of inertia, the first swinging body 6 and the second swinging body 7 are respectively forced to swing forward in the rotating direction of the blade motor 2 together with the first blade 3 and the second blade 4, then the instantaneous pitch of the first blade 3 swinging forward is decreased at the front side of the airframe 1, and the instantaneous pitch of the second blade 4 swinging forward is increased at the rear side of the airframe 1, so that the lift force of the first blade 3 when rotating to the front side of the airframe 1 can be decreased and the lift force of the second blade 4 when rotating to the rear side of the airframe 1 can be increased. Accordingly, the first blade 3 with the instantaneously decreased lift force guides the airframe 1 to lower at the front side of the airframe 1, and the second blade 4 with the instantaneously increased lift force guides the airframe 1 to lift at the rear side of the airframe 1, which enables the airframe 1 in backward titling flight state to tilt in the opposite direction, thereby braking forward and decelerating the airframe 1 in backward flight, thus realizing a forward braking function.

According to the control method of the present invention, the helicopter can be controlled to fly laterally, which will be illustrated in detail taking leftward flight and rightward braking as an example.

FIG. 10 shows a method for controlling the helicopter to fly leftward according to an embodiment of the present invention. The control is performed as follows to allow the airframe 1 to fly leftward.

The propeller motor 2 of the helicopter is actuated to drive the blades of the propellers to rotate at clockwise a high speed to make the airframe 1 hover in the air. When the motor encoder monitors that the first blade 3 and the second blade 4 rotate to the right position and the left position of the airframe 1 respectively, the control system increases the instantaneous torque of the blade motor 2 (namely instantaneously increasing the rotational speed of the blade motor 2), under the action of inertia, the first swinging body 6 and the second swinging body 7 are respectively forced to swing backward in the rotating direction of the blade motor 2 together with the first blade 3 and the second blade 4, so that the instantaneous pitch of the first blade 3 swinging backward is increased at the right position of the airframe 1 and the instantaneous pitch of the second blade 4 swinging backward is decreased at the left position of the airframe 1. Subsequently, with function of the motor encoder feeding back the rotating positions of the first blade 3 and the second blade 4 to the control system in real time, once the control system monitors that the first blade 3 and the second blade 4 rotate to the right position and the left position of the airframe 1 respectively, the instantaneous pitch of the first blade 3 at the right position of the airframe 1 is continuously increased and the instantaneous pitch of the second blade 4 at the left position of the airframe 1 is continuously reduced with continuously increasing the instantaneous torque of the blade motor 2 by the control system. In this way, the lift force of the first blade 3 when it rotates to the right side of the airframe 1 can be increased and the lift force of the second blade 4 when it rotates to the left side of the airframe 1 can be reduced. Accordingly, the first blade 3 with the instantaneously increased lift force drives the airframe 1 to lift at the right position of the airframe 1, while the second blade 4 with the instantaneous decreased lift force guides the airframe 1 to lower at the left position of the airframe 1, which allows the airframe 1 to tilt leftward as a whole. The helicopter further flies leftward with the air thrust generated by the continuous rotation of the propellers, thus enabling the helicopter to change from a hovering state to a leftward flight state.

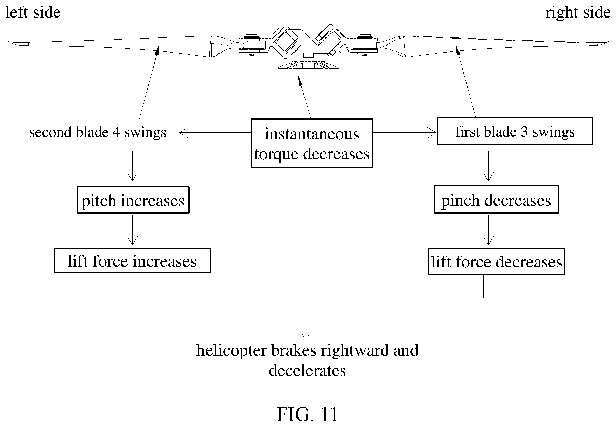

FIG. 11 shows a method for controlling the helicopter to brake rightward according to an embodiment of the present invention. The control is performed as follows to allow the airframe 1 in leftward flight state to brake rightward.

When the motor encoder detects that the first blade 3 and the second blade 4 rotate to the right side and the left side of the airframe 1 respectively, the control system reduces the instantaneous torque of the blade motor 2 (namely instantaneously reducing the rotational speed of the blade motor 2), under the action of inertia, the first swinging body 6 and the second swinging body 7 are respectively forced to swing forward due to inertia in the rotating direction of the blade motor 2 together with the first blade 3 and the second blade 4, then the instantaneous pitch of the first blade 3 swinging forward is decreased at the right position of the airframe 1, and the instantaneous pitch of the second blade 4 swinging forward is increased at the left position of the airframe 1, so that the lift force of the first blade 3 when rotating to the right side of the airframe 1 can be decreased and the lift force of the second blade 4 when rotating to the left side of the airframe 1 can be increased. Accordingly, the first blade 3 with the instantaneously decreased lift force guides the airframe 1 to lower at the right position of the airframe 1, and the second blade 4 with the instantaneously increased lift force guides the airframe 1 to lift at the left position of the airframe 1, which allows the airframe 1 in the leftward titling flight state to tilt in the opposite direction, thereby braking rightward and decelerating the airframe 1 which is in leftward flight, thus realizing a rightward braking function.

Similarly, the helicopter of the present invention can be controlled to perform rightward flight and leftward braking.

According to the above-mentioned swashplateless helicopte and the control method thereof, the present invention, with the swashplate and the steering gear existing in the traditional unmanned helicopter eliminated, maintains to achieve control of direction-changing flight of the helicopter, which can effectively reduce manufacturing cost, reduce load of the airframe, while improving endurance, simplifying structure, and prolonging service life of helicopter.

The above embodiments are only intended to illustrate the technical solutions of the present invention, and not to limit the same. Although the present invention has been described in detail with reference to the foregoing embodiments, it should be understood by those of ordinary skill in the art that the technical solutions described in the foregoing embodiments may still be modified, or some technical features may be equivalently replaced, and such modifications or substitutions do not make the essence of the corresponding technical solutions depart from the scope of the technical solutions of various embodiments of the present invention.

## Claims

1. A swashplateless helicopter, comprising:
an airframe (1);
a blade motor (2) mounted on the airframe (1) and controlled by a control system, which is provided with a rotating bracket (5) in a transmission way, wherein the rotating bracket (5) has a first swinging body (6) and a second swinging body (7) which respectively hinged at two opposite sides of the rotating bracket (5); and
a first blade (3) and a second blade (4), which are positioned at two opposite sides of the blade motor (2) and respectively connected to the first swinging body (6) and the second swinging body (7),
wherein the first swinging body (6) and the second swinging body (7) are respectively configured to drive the first blade (3) and the second blade (4) to swing forward or backward in a rotating direction of the blade motor (2), so as to respectively change a pitch of the first blade (3) and the second blade (4); and
wherein the blade motor (2) is further provided with a motor encoder electrically connected to the control system, which is configured to feed a rotating position of the blade motor (2) back to the control system in real time, so that the control system is able to monitor a rotating position of the first blade (3) and the second blade (4) in real time.

2. The swashplateless helicopter according to claim 1, wherein a first hinge shaft (8) and a second hinge shaft (9) are respectively disposed at the two opposite sides of the rotating bracket (5), with the first swinging body (6) pivoted to the first hinge shaft (8) and the second swinging body (7) pivoted to the second hinge shaft (9); and
the first hinge shaft (8) and the second hinge shaft (9) are parallel to each other and obliquely disposed relative to a rotating shaft of the rotating bracket (5), with an upper end of the first hinge shaft (8) obliquely directed to the rotating shaft of the rotating bracket (5) and a lower end of the second hinge shaft (9) obliquely directed to the rotating shaft of the rotating bracket (5);
wherein the first swinging body (6) is configured to drive the first blade (3) to swing backward due to inertia around the first hinge shaft (8) in the rotating direction of the blade motor (2) and increase the pitch of the first blade (3), and the second swinging body (7) is configured to drive the second blade (4) to swing backward due to inertia around the second hinge shaft (9) in the rotating direction of the blade motor (2) and decrease the pitch of the second blade (4), in a case that an instantaneous torque of the blade motor (2) is increased; and
wherein the first swinging body (6) is configured to drive the first blade (3) to swing forward due to inertia around the first hinge shaft (8) in the rotating direction of the blade motor (2) and decrease the pitch of the first blade (3), and the second swinging body (7) is configured to drive the second blade (4) to swing forward due to inertia around the second hinge shaft (9) in the rotating direction of the blade motor (2) and increase the pitch of the second blade (4), in a case that the instantaneous torque of the blade motor (2) is decreased.

3. The swashplateless helicopter according to claim 2, wherein the rotating bracket (5) has a first connecting arm (10) and a second connecting arm (11) which are disposed opposite to each other, with a height position of the first connecting arm (10) lower than that of the second connecting arm (11), wherein a first hinge plate (12) extending obliquely upward is formed at an outer end of the first connecting arm (10), and a second hinge plate (13) extending obliquely downward is formed at an outer end of the second connecting arm (11), with the first hinge plate (12) and the second hinge plate (13) parallel to each other, an upper end of the first hinge plate (12) flush with a top of the second connecting arm (11), and a lower end of the second hinge plate (13) flush with a bottom of the first connecting arm (10);
wherein a first U-shaped blade clamp (14) is disposed at an inner end of the first swinging body (6), and a second U-shaped blade clamp (15) is disposed at an inner end of the second swinging body (7); and
wherein the first U-shaped blade clamp (14) is parallelly sleeved with the first hinge plate (12), with the first hinge shaft (8) vertically pivoted to both the first hinge plate (12) and the first U-shaped blade clamp (14), and the second U-shaped blade clamp (15) is parallelly sleeved with the second hinge plate (13), with the second hinge shaft (9) vertically pivoted to both the second hinge plate (13) and the second U-shaped blade clamp (15).

4. The swashplateless helicopter according to claim 3, wherein a first arc-shaped guide groove (16) is formed in an end face of the first U-shaped blade clamp (14) and a second arc-shaped guide groove (17) is formed in an end face of the second U-shaped blade clamp (15); the first connecting arm (10) or the first hinge plate (12) is correspondingly provided with a first limiting block (18) located in the first arc-shaped guide groove (16), and the second hinge plate (13) or the second connecting arm (11) is correspondingly provided with a second limiting block (19) located in the second arc-shaped guide groove (17); and
wherein the first limiting block (18) is configured to be limitation contact with two ends of the first arc-shaped guide groove (16) during reciprocating rotation of the first arc-shaped guide groove (16) along with the first swinging body (6), and second limiting block (19) is configured to be limitation contact with two ends of the second arc-shaped guide groove (17) during reciprocating rotation of the second arc-shaped guide groove (17) along with the second swinging body (7).

5. The swashplateless helicopter according to any one of the preceding claims, wherein a third U-shaped blade clamp (20) is disposed at an outer end of the first swinging body (6), to which the first blade (3) is pivoted, and a fourth U-shaped blade clamp (21) is disposed at an outer end of the second swinging body (7), to which the second blade (4) is pivoted.

6. A control method adapted to control the swashplateless helicopter according to any one of the preceding claims to perform a direction-changing flight, comprising steps of:
increasing or decreasing an instantaneous torque of the blade motor (2) at a specific rotating position by the control system;
driving the first swinging body (6) and the second swinging body (7) to respectively swing backward or forward at the specific rotating position together with the first blade (3) and the second blade (4), under an action of inertia, so as to respectively change the pitch of the first blade (3) and the second blade (4) at the specific rotating position; and
guiding the airframe (1) to tilt in a corresponding direction, under the changed pitch of the first blade (3) and the second blade (4).

7. The control method according to claim 6, wherein the method for controlling the helicopter to fly forward comprises steps of:
detecting, by the motor encode, the first blade (3) and the second blade (4) if it respectively rotates to a rear side and a front side of the airframe (1);
if yes, increasing, by the control system, the instantaneous torque of the blade motor (2);
driving the first swinging body (6) and the second swinging body (7) to swing backward in the rotating direction of the blade motor (2) together with the first blade (3) and the second blade (4), under the action of inertia, so as to increase the instantaneous pitch of the first blade (3) swinging backward at the rear side of the airframe (1) and decrease the instantaneous pitch of the second blade (4) swinging backward at the front side of the airframe (1); and
increasing a lift force of the first blade (3) when rotating to the rear side of the airframe (1) and decreasing a lift force of the second blade (4) when rotating to the front side of the airframe (1), under the changed pitch of the first blade (3) and the second blade (4).

8. The control method according to claims 6 or 7, wherein the method for controlling the helicopter to brake backward comprises steps of:
detecting, by the motor encode, the first blade (3) and the second blade (4) if it respectively rotates to the rear side and the front side of the airframe (1);
if yes, decreasing, by the control system, the instantaneous torque of the blade motor (2);
driving the first swinging body (6) and the second swinging body (7) to swing forward in the rotating direction of the blade motor (2) together with the first blade (3) and the second blade (4), under the action of inertia, so as to decrease the instantaneous pitch of the first blade (3) swinging forward at the rear side of the airframe (1) and increase the instantaneous pitch of the second blade (4) swinging forward at the front side of the airframe (1); and
decreasing the lift force of the first blade (3) when rotating to the rear side of the airframe (1) and increasing the lift force of the second blade (4) when rotating to the front side of the airframe (1), under the changed pitch of the first blade (3) and the second blade (4).

9. The control method according to any one of claims 6 to 8, wherein the method for controlling the helicopter to fly backward comprises steps of:
detecting, by the motor encode, the first blade (3) and the second blade (4) if it respectively rotates to a front side and a rear side of the airframe (1);
if yes, increasing, by the control system, the instantaneous torque of the blade motor (2);
driving the first swinging body (6) and the second swinging body (7) to swing backward in the rotating direction of the blade motor (2) together with the first blade (3) and the second blade (4), under the action of inertia, so as to increase the instantaneous pitch of the first blade (3) swinging backward at the front side of the airframe (1) and decrease the instantaneous pitch of the second blade (4) swinging backward at the rear side of the airframe (1); and
increasing a lift force of the first blade (3) when rotating to the front side of the airframe (1) and decreasing a lift force of the second blade (4) when rotating to the rear side of the airframe (1), under the changed pitch of the first blade (3) and the second blade (4).

10. The control method according to any one of claims 6 to 9, wherein the method for controlling the helicopter to brake forward comprises steps of:
detecting, by the motor encode, the first blade (3) and the second blade (4) if it respectively rotates to the front side and the rear side of the airframe (1);
if yes, decreasing, by the control system, the instantaneous torque of the blade motor (2);
driving the first swinging body (6) and the second swinging body (7) to swing forward in the rotating direction of the blade motor (2) together with the first blade (3) and the second blade (4), under the action of inertia, so as to decrease the instantaneous pitch of the first blade (3) swinging forward at the front side of the airframe (1) and increase the instantaneous pitch of the second blade (4) swinging forward at the rear side of the airframe (1); and
decreasing the lift force of the first blade (3) when rotating to the front side of the airframe (1) and increasing the lift force of the second blade (4) when rotating to the rear side of the airframe (1), under the changed pitch of the first blade (3) and the second blade (4).

11. The control method according to any one of claims 6 to 10, wherein the method for controlling the helicopter to fly laterally comprises steps of:
detecting, by the motor encode, the first blade (3) and the second blade (4) if it respectively rotates to a left side and right side of the airframe (1);
if yes, increasing, by the control system, the instantaneous torque of the blade motor (2);
driving the first swinging body (6) and the second swinging body (7) to swing backward in the rotating direction of the blade motor (2) together with the first blade (3) and the second blade (4), under the action of inertia, so as to increase the instantaneous pitch of the first blade (3) swinging backward at the left side or right side of the airframe (1) and correspondingly decrease the instantaneous pitch of the second blade (4) swinging backward at the right side or the left of the airframe (1); and
increasing a lift force of the first blade (3) when rotating to the left side or right side of the airframe (1) and correspondingly decreasing a lift force of the second blade (4) when rotating to the right side or the left side of the airframe (1), under the changed pitch of the first blade (3) and the second blade (4).

12. The control method according to any one of claims 6 to 11, wherein the method for controlling the helicopter to brake laterally comprises steps of:
detecting, by the motor encode, the first blade (3) and the second blade (4) if it respectively rotates to the left side and the right side of the airframe (1);
if yes, decreasing, by the control system, the instantaneous torque of the blade motor (2);
driving the first swinging body (6) and the second swinging body (7) to swing forward in the rotating direction of the blade motor (2) together with the first blade (3) and the second blade (4), under the action of inertia, so as to decrease the instantaneous pitch of the first blade (3) swinging forward at the left side or right side of the airframe (1) and increase the instantaneous pitch of the second blade (4) swinging forward at the right side or left side of the airframe (1); and
decreasing the lift force of the first blade (3) when rotating to the left side or right side of the airframe (1) and increasing the lift force of the second blade (4) when rotating to the right side or left side of the airframe (1), under the changed pitch of the first blade (3) and the second blade (4).
